# EUROPEAN PATENT APPLICATION

(11) **EP 1 008 785 A2**
(43) Date of publication of application: **14.06.2000**
(21) Application number: 99204190.5
(22) Date of filing: 07.12.1999
(51) Int. Cl.: F16H 61/46

(54) **Automatic shift for a two speed hydrostatic motor of a compact agricultural tractor**

(30) Priority: 10.12.1998 US 111613 P
(71) Applicant: NEW HOLLAND U.K. LIMITED, Basildon, Essex SS14 3AD (GB)
(72) Inventor: Ellis, Preston L., Mountville, PA 17554 (US); Loftus, Terry, Bothell, WA 98011 (US)
(74) Representative: Vandenbroucke, Alberic

(57) **Abstract**

The invention relates to an automatic shift for a two speed hydrostatic motor (35) on a compact tractor (1). A pressure sensor (54) monitors the pressure in a working line (25, 28) supplying fluid from a pump (33) to the motor (35). When the pressure exceeds a pre-determined pressure for a certain time interval, a controller (53) signals a solenoid (42) to shift a pilot valve (40) allowing fluid to shift a torque valve (45). The shifting of the torque valve (45) allows fluid to reach cylinders (47) which shift a swash plate (36) controlling the motor's speed. Conversely, if there is a reduction in pressure below a further pre-determined pressure, the controller (53) deactivates the solenoid (42), whereby the pilot valve (40) and torque valve (45) return to their previous positions. In addition, a switch (101) is provided to allow the operator to select an automatic mode or to allow the motor (35) to remain at either a high or a low speed setting.

## Description

The present invention relates to an improvement of an agricultural tractor, more specifically to an automatic shifting arrangement for a two speed hydrostatic motor of a compact agricultural tractor.

Agricultural tractors have been used for a variety of farming operations for decades, and as tractors have become more versatile, they are now being used for a greater number of agricultural tasks than in the past. More recently, hydrostatic transmissions have been introduced to propel the farm tractor as they are simpler to operate compared to a traditional, mechanical transmission. Instead of having to constantly depress a clutch to change the gears of a mechanical transmission, a hydrostatic transmission can be operated by depressing a pedal which controls a pump, which in turn controls a motor. However, it is well known that, during operation, a variety of loads can operate on the tractor and hence on the hydrostatic motor. For instance, when the operator is moving an idle tractor over a large distance, the motor can operate at a low torque, but high speed. Conversely, when the operator is moving a large load over a short distance, the motor operates at a high torque, but low speed.

Frequently, the operator will be manipulating a loader boom and will manoeuvre the tractor into a pile of material which needs to be moved by the loader boom. A hydrostatic motor, that could sense the change of force required and automatically changes its output in dependence thereof, would greatly assist an operator. A variety of hydrostatic motors are currently available, which unfortunately can be quite expensive and complicated to shift to the various speed and torque ratios.

These and additional difficulties are addressed in the prior art document US-A-5.177.964 which illustrates a hydraulic drive travelling system. The patent discloses a hydraulic drive that adjusts an infinitely variable swash plate on a hydraulic motor in accordance with the sensed pressure in the pump output. This provides an extremely fine but expensive means for controlling the drive system, the more that the sensors and electronics needed to monitor such a complicated system greatly add to the overall cost of the system. In addition, infinitely variable hydrostatic motors are also very expensive.

Consequently, the need exists for low-cost means for changing the speed of a hydrostatic motor to correspond with the torque and speed demands which an operator places.

It is therefore an object of the present invention to provide an automatic shifting arrangement for a two speed hydrostatic motor used on a compact agricultural tractor.

According to the present invention, an automatic shift arrangement is provided for a two speed hydrostatic motor of an agricultural vehicle, comprising :
- a power supply means;
- a pump operably connected to said power supply means; and
- a two speed hydrostatic motor, said pump and motor being operably connected to each other by first and second working lines.

The arrangement is characterized in that it further comprises :
- a torque valve having a first position and a second position, said torque valve being operably connected to the first and second working lines and controlling a swash plate on the two speed hydrostatic motor;
- a pilot valve for moving the torque valve from the first position to the second position and vice versa, said pilot valve having a solenoid capable of moving the pilot valve from a third position to a fourth position; and
- a pressure transducer monitoring the pressure in at least one of the first and second working lines, said pressure transducer being operably connected to the solenoid in a manner such that, upon the pressure transducer detecting a level of pressure in the at least one of the working lines outside a predetermined limit pressure, the solenoid moves the pilot valve allowing the torque valve to shift the two speed hydrostatic motor.

When the pressure exceeds the pre-determined limit pressure for a certain time interval, a controller monitoring the sensor, de-activates the solenoid to re-position the pilot valve. The re-positioning of the pilot valve changes the position of the torque valve. This allows a pair of cylinders to drain and shift the swash plate on the motor. Conversely, when the pressure sensor detects a lower pressure, the controller activates the solenoid. This returns the pilot valve to its previous position, providing fluid flow to the torque valve. When the torque valve returns to its previous position, the swash plate swifts and the motor increases in speed. By using a two speed motor, appreciable cost savings are achieved. The operator also has a switch means that allows the motor to be shifted automatically, as previously described, or to set the motor at a high or low speed.

The present invention will now be described further, by way of example, with reference to the accompanying drawings, in which :
Figure 1 is a general perspective view of an agricultural tractor;
Figure 2 is a schematic drawing of the hydraulic circuit of the present invention;
Figure 3 is a schematic drawing of the electrical circuit showing the switch means and controller means of the present invention; and
Figure 4 is a graph representing the automatic shifting sequence of the present invention depending on the pressure vs time characteristics.

Referring to the drawings, the major elements and general operation of the present invention can be seen. Left and right references are used as a matter of convenience and are determined by standing at the rear of the tractor and facing the forward end in the normal direction of travel. Likewise, forward and rearward are determined by the normal direction of travel of the tractor. Upward or downward orientations are relative to the ground or operating surface while horizontal or vertical planes are also relative to ground.

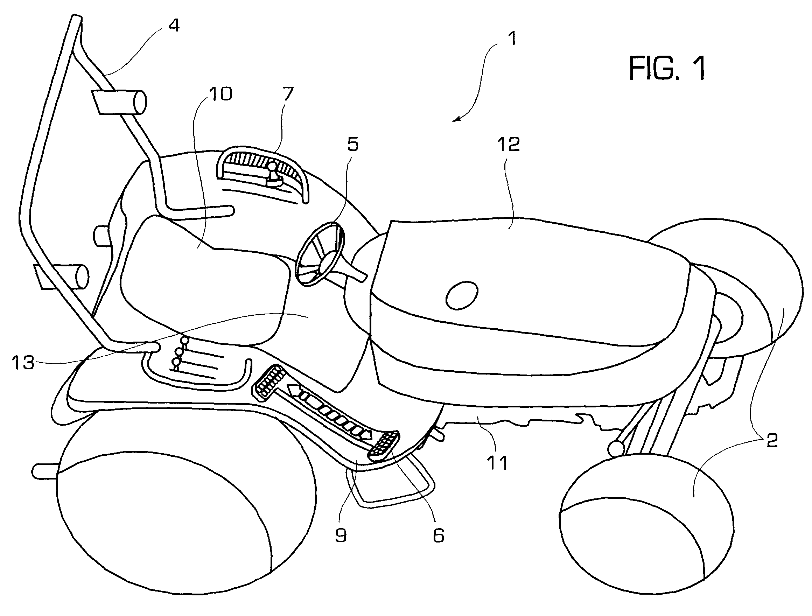

Figure 1 illustrates a conventional agricultural tractor containing the present invention. A typical farm tractor 1 has a pair of front wheels 2 and a pair of rear wheels (only one being shown) for movement and the support of the body of the tractor. The tractor 1 further comprises an engine compartment 12 for supplying power to the tractor. An operator's platform 9, containing an operator's chair 10, is reached by a platform step. From the operator's chair 10, the operator can observe and control a variety of farming operations. A steering wheel 5 supported by a steering column is located in front of the operator's chair 10. There are a set of left- and right-hand controls for controlling the hitch, power-take-off (PTO) (not shown) and various other agricultural systems. The transmission housing 13 contains the transmission (not shown) which provides power to the rear wheels. The transmission is controlled by a hydrostatic transmission control pedal (hydro pedal) 6, which is depressed by the operator to select the speed and direction of the tractor 1. An operator is protected by a roll over protection bar 4, which in many tractors conventionally is incorporated into an enclosed cab structure. Apart from a rearwardly mounted hitch device, many tractors have a front mount enabling other implements such as a bucket loader or a lift to be installed. The present invention focuses on the transmission housing 13 and engine 12 of the tractor 1. The automatic shift device for a two speed hydrostatic motor of the compact agricultural tractor 1 is located beneath the operator's chair 10.

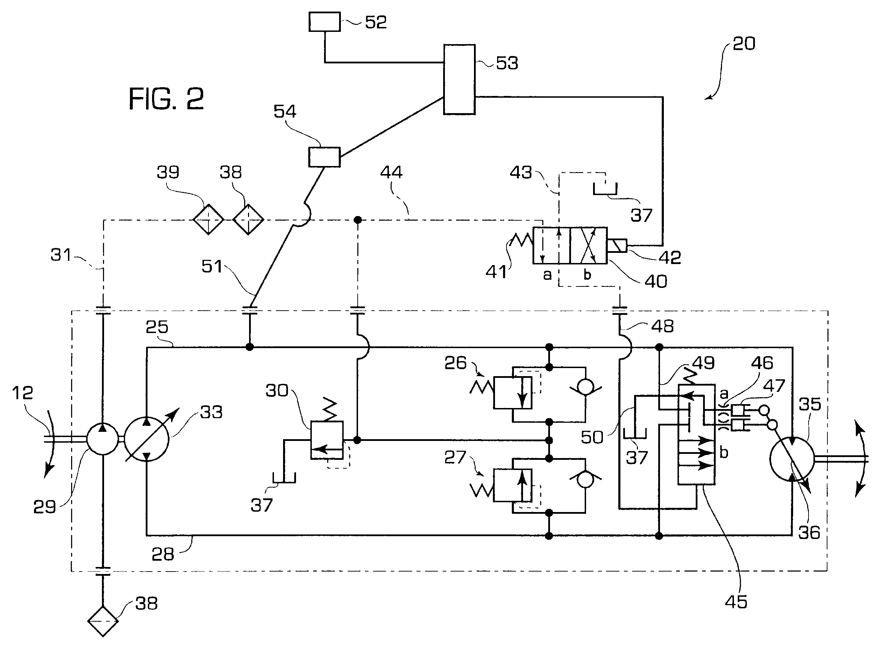

Figure 2 illustrates the general hydraulic circuit design of the automatic shift device 20 of a two speed hydrostatic motor 35. The design comprises the driving motor or engine 12 which drives a variable displacement pump 33, controlled by the hydro pedal 6, and a charge pump 29. As seen in the direction of the oil flow when the tractor 1 is moving forward, the pump 33 is connected to the two speed hydrostatic motor 35 by a first working line 25 (normally called the high pressure side) and the motor 35 is connected to the pump 33 by a second working line 28 (normally called the low pressure side or return line), thereby forming a closed circuit. As occurs in most conventional hydrostatic pump/motor combinations, hydraulic fluid is pumped to the motor 35 by the pump 33 through the first working line 25 and returned to the pump 33 through the second working line 28. Of course, the flow in the lines is reversed upon the operator selecting rearward drive. Controlling the speed of the motor 35 not only can be achieved by varying the output of the pump 33 but also by varying the angle of the motor swash plate 36. The way in which the position of the motor swash plate 36 can be changed, will be discussed later.

The system further comprises several limiting valves to prevent damage to the system in the event of excess pressures. There is a first and a second limiting valve 26 and 27 designed to relieve pressure in the first and second working lines 25 and 28, respectively. The limiting valves are designed to be triggered when pressures in excess of 3.500 N/cm² (appr. 5000 psi) occur in the working lines. The limiting valves 26 and 27 are activated allowing the hydraulic fluid in the working lines 25 or 28 to be transferred to a drain 37. This prevents the excess pressure from damaging the motor 35 or other expensive components. These limiting valves 26 and 27 are well known to one skilled in the art, and therefore need no further explanation. In addition, a charge pump valve 30 is provided, designed to open at 140 N/cm² (appr. 200 psi) to prevent damage to the charge pump 29. Again, when the valve 30 opens, the hydraulic fluid is allowed to be discharged to a drain 37. It will be appreciated that because the charge pump valve 30 and the limiting valves 26 and 27 open to the drain at 140 N/cm², respectively 3.500 N/cm², the entire system will be protected from excess pressures. Also obvious to one skilled in the art are several filters 38, coolers 39 and drains 37 which are conventional in a hydraulic circuit.

To control the position of the swash plate 36 of the two speed motor 35, there are two valves - a pilot valve 40 and a torque valve 45, which both can be moved to two positions. The torque valve 45 is connected to the motor swash plate 36 by a pair of cylinders 47 and a pair of orifices 46. As seen in figure 2, the torque valve 45 is biased in the first position 'a'. In this position, any fluid in the cylinders 47 exits through the torque valve drain line 50. When the torque valve is shifted to the second position 'b' (the valve 45 is moved upwards as viewed in figure 2), fluid from either the first working line 25 or second working line 28 enters one of the orifices 46 and cylinders 47. This allows the motor swash plate 36 to be shifted to a position permitting the motor to increase speed. The movement of the torque valve 45 from the first and second positions is controlled by the torque valve line 48 whereas fluid through the torque valve line 48 is controlled by the pilot valve 40. The pilot valve 40 also has two positions - a third position (position 'a') and a fourth position (position 'b'). There is a bias spring 41 which actuates the valve 40 into the third position (or 'a' position as seen in figure 2).

The pilot valve further has a solenoid 42 which, when actuated, moves the pilot valve into the fourth position (position 'b'). When the pilot valve 42 is in the fourth or 'b' position, hydraulic fluid from the charge line 31 and pilot valve line 44 flows to the torque valve line 48. This fluid moves the torque valve 45 from the 'a' or first position to the 'b' or second position. As previously stated, when the torque valve 45 is in the second or 'b' position, fluid from the first or second working lines 25 or 28 enters one of the orifices 46 and cylinders 47 and changes the position of the motor swash plate 36 to a position for, on the one hand, increasing the output speed of the hydrostatic motor 35 and, on the other hand, decreasing the output torque. Returning to the pilot valve 40, when the solenoid 42 is de-activated, the valve 40 is pushed by the bias spring 41 back to the 'a' or third position. This connects the torque valve line 48 to the pilot drain line 43 and to a drain 37. The loss of fluid in the torque valve line 48 moves the torque valve 45 back to the first or 'a' position, which ultimately shifts the motor swash plate 36 to a position for decreasing the output speed but increasing the output torque.

Controlling the solenoid 42, and hence ultimately the motor swash plate 36, is a controller means 53 which receives electrical signals from a pressure sensor means 54 and a switch means 52. The controller means 53 then sends signals to the solenoid 42 which responds to position the pilot valve 40. The pressure sensor means 54 is connected through a pressure sensor line 51 so as to monitor the pressure in the first working line 25. In a preferred embodiment, an Eclipse pressure transducer manufactured by Data Instruments Inc. is used. It has a range of 70 through 4.900 N/cm² (appr. 100 through 7100 psi).

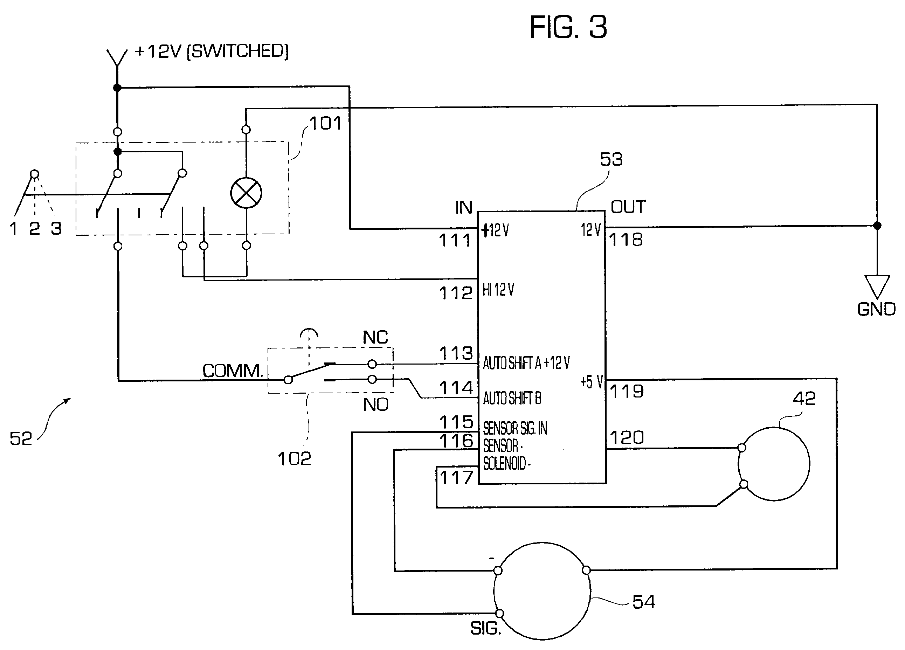

Figure 3 illustrates the electrical schematic of the switch means 52, controller means 53, the pressure sensor means 54 and solenoid 42. The switch means 52 consists of a three-position switch 101 and a two-position switch 102. As seen in figure 3, the three positions 1, 2 and 3 of switch 101 correspond to three different settings whereby the operator can set and control the solenoid 42 and consequently the swash plate 36. Position 1 results in the solenoid 42 being in the off position, thus resulting in the swash plate 36 and motor 35 remaining in a low speed (and hence high torque) position. If the operator selects position 3, the solenoid is continuously on, resulting in the swash plate 36 and motor 35 being in the high speed setting. When the operator selects position 2 of switch 101, the auto shift feature of the present invention is activated, whereby the controller 53 uses the pressure detected by the pressure sensor 54 to automatically activate or de-activate the solenoid 42. Depending on the pressure, the solenoid 42 will change the position of the pilot valve 40, which in turn positions the torque valve 45, leading, as already explained, to an altered position of the swash plate 36 and a change of the motor's operating speed.

Switch 102 has only two positions which respectively correspond to the forward or reverse drive direction of the tractor 1.

The controller means 53 is a conventional controller with seven inputs 111 to 117, and three outputs 118 to 120, as indicated in figure 3. The controller 53 receives a first electrical signal (or signals) 115, 116 from the pressure sensing means 54 and transmits a second electrical signal (or signals) 120 from the controller means 53 to the solenoid 42. As previously described, the switch means 52 transmits a third electrical signal (or signals) 111 to 114 from the switch means 52 to the controller means 53. The controller means 53 responds to four conditions and composes the second electrical signal (or signals) 120 for sending to the solenoid 42 depending on those conditions. When switch 101 is in position 1, the controller 53 is off and solenoid 42 is off. As will be observed in Figure 3, a change-over on switch 102 when shifting driving direction from forward to reverse or vice versa has no effect, and the controller 53 remains off. Conversely, when switch 101 is in position 3, the controller 53 activates the solenoid 42 continuously. A change-over of switch 102 again has no effect.

When switch 101 is in position 2, with switch 102 in the "NC" (normally closed) position (which is an indication that the tractor 1 is moving forward), the controller 53 initially activates the solenoid 42 to place the motor 35 in the high speed position. In the meantime, the controller 53 continuously monitors the pressure sensor 54 output signal 115. If the signal 115 indicates a pressure of 2100 N/cm² (appr. 3000 psi) or higher (which is an indication that the tractor 1 is experiencing an increased load e.g. by moving into a pile of material), the controller 53 deactivates the solenoid 42 to place the motor 35 in the low speed (but high torque) position. The solenoid 42 remains off until switch 102 changes over to the "NO" (normally open) contact position as a result of a shifting into the reverse driving direction, whereafter the controller 53 re-activates the solenoid 42 to obtain the high speed position of the motor 35. This is a logical step in as much as, when reversing the tractor 1 and thus backing up from a pile of material, a lower load on the tractor 1 can be expected. The solenoid 42 remains on as long as switch 101 maintains position 2 and switch 102 maintains continuity through the "NO" contact position. A change- over of switch 102 back to the "NC" contact position maintains solenoid 42 'on', but re-sets the controller to monitor the sensor signal to the 2100 N/cm² level, as previously described.

It will be appreciated that in the above embodiment, only an upper pressure limit of the working line 25 is monitored during forward travel of the tractor 1, whereby, once the limit exceeded, the motor 35 is placed in the high torque position and remains there until the drive direction of the tractor is reversed.

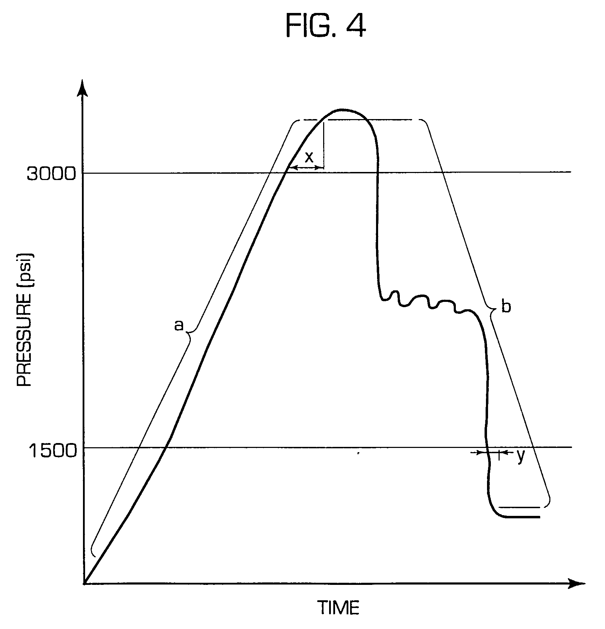

In an alternative embodiment, which is visualised in Figure 4, the controller 53 takes account of an upper and a lower pressure limit. More specifically, in operation, when the operator has selected position 2 on switch 101, the solenoid 42 is initially activated and keeps the motor 35 in the high speed position. The motor remains in the high speed position (a) until the pressure in the first working line 25 exceeds 2.100 N/cm² (appr. 3000 psi) for a predetermined interval of time (x), usually 1/30 of a second. At that point, the controller means 53 de-activates the solenoid 42, which shifts the motor into the low speed position (b). This will result in an immediate drop of pressure below 2.100 N/cm² but normally still higher than 1.050 N/cm² (appr. 1500 psi), which is considered as a lower limit. The motor 35 remains in the low speed position, with the solenoid 42 de-activated for as long as the pressure does not drop below the 1.050 N/cm² limit. Should the increased load on the tractor disappear for one or other reason, resulting in a pressure drop below the 1.050 N/cm² limit for a predetermined interval of time (y), then the controller 53 issues an electrical signal for re-activating the solenoid 42. This again shifts the motor 35 into the high speed position. It will be clear that with the above embodiment, the motor 35 setting is altered each time a pressure is experienced above or below the upper, respectively lower pressure limit. Such an arrangement is convenient in that it continuously responds to varying load conditions of the tractor (e.g. driving uphill or downhill). Of course, the time intervals and pressures can be altered depending on various system requirements.

It will be obvious to those skilled in the art that various changes may be made without departing from the scope of the invention and the invention is not to be considered limited to what is illustrated in the drawings and described in the specification. As an example, it is conceivable to additionally connect the pressure sensor 54 to the second working line 28 through a further sensor line (not shown) whereby the position of the switch 102 could give an indication which of the two sensed pressures to take into account. As such, the arrangement could work equally well in the forward as in the rearward driving direction of the tractor.

## Claims

1. An automatic shift arrangement for a two speed hydrostatic motor (35) of an agricultural vehicle (1), comprising :
- a power supply means (12);
- a pump (33) operably connected to said power supply means (12); and
- a two speed hydrostatic motor (35), said pump (33) and motor 35) being operably connected to each other by first and second working lines (25, 28); and
characterized in that the arrangement further comprises :
- a torque valve (45) having a first position (a) and a second position (b), said torque valve (45) being operably connected to the first and second working lines (25, 28) and controlling a swash plate (36) on the two speed hydrostatic motor (35);
- a pilot valve (40) for moving the torque valve (45) from the first position (a) to the second position (b) and vice versa, said pilot valve (40) having a solenoid (42) capable of moving the pilot valve (40) from a third position (a) to a fourth position (b); and
- a pressure transducer (54) monitoring the pressure in at least one of the first and second working lines (25, 28), said pressure transducer (54) being operably connected to the solenoid (42) in a manner such that, upon the pressure transducer (54) detecting a level of pressure in the at least one of the working lines (25, 28) outside a predetermined limit pressure, the solenoid (42) moves the pilot valve (40) allowing the torque valve (45) to shift the two speed hydrostatic motor (35).

2. An automatic shift arrangement according to claim 1 characterized in that the first and second positions (a and b) of the torque valve (45) respectively correspond to a high and a low torque state of the motor (35).

3. An automatic shift arrangement according to claims 1 or 2, characterized in that the arrangement further comprises a switch means (52) electrically connected to a controller means (53), said controller means (53) in turn being electrically connected to the pressure transducer (54) and the solenoid (42) and operable to control the solenoid (42) based on electrical signals from the switch means (52) and the pressure transducer (54).

4. An automatic shift arrangement according to any of the preceding claims, characterized in that said pilot valve (40) further comprises a bias spring (41) for biasing said pilot valve (40) in the third position (a).

5. An automatic shift arrangement according to any of the preceding claims, characterized in that the arrangement further comprises first and second pressure limiting valves (26, 27) operably connected respectively to the first and second working lines (25, 28).

6. An automatic shift arrangement according to any of the preceding claims, characterized in that the arrangement further comprises a charge pump (29) connected to the power supply means (12) and having a charge line (31) operably connected to the pilot valve (40), said charge line comprising a charge pump valve (30) operably connected therewith.

7. An automatic shift arrangement according to any of the preceding claims, characterized in that the arrangement further comprises at least one hydraulic cylinder (47) for controlling the swash plate (36) of the two speed motor (35), the at least one cylinder (47) being in flow communication with the torque valve (45).

8. An automatic shift arrangement according to claim 7, characterized in that a torque valve drain line (50) is connected to a drain (37) for allowing the at least one cylinder (47) to drain when the torque valve (45) is in the first position (a).

9. An automatic shift arrangement according to any of the preceding claims, characterized in that the arrangement further comprises a torque valve line (48) operably connecting the torque valve (45) to the pilot valve (40) in a manner such that, when the pilot valve (40) is in the fourth position (b), the torque valve (45) is moved to the second position (b).

10. An automatic shift arrangement according to any of the preceding claims characterized in that the arrangement further comprises a pilot drain line (43) for connecting the pilot valve (40) to a drain (37) in a manner such that the torque valve line (43) can drain when the pilot valve (40) is in the third position.

11. An automatic shift arrangement according to any of the preceding claims, characterized in that a first predetermined limit pressure is set at a pressure of approximately 2100 N/cm²; the solenoid (42) allowing the pilot valve (40) to move to the third position (a) if a pressure greater than the first predetermined limit pressure is maintained for longer than a first predetermined time interval (x).

12. An automatic shift arrangement according to claim 11, characterized in that a second predetermined limit pressure is set at a pressure of approximately 1050 N/cm²; the solenoid (42) moving the pilot valve (40) to the fourth position (b) if a pressure smaller than the second predetermined limit pressure is maintained for longer than a second predetermined time interval (y).

13. An automatic shift arrangement according to claim 3 and any claim appended thereto, characterized in that the switch means (52) comprises a switch (102) detecting the drive direction of the vehicle; the arrangement being such that upon reversing the drive direction, the torque valve (45) is moved to or maintained in said second position (b).

14. An automatic shift arrangement according to claim 13, characterized in that the switch means (52) further comprises a three-position switch (101) having :
- a first position in which the controller continuously maintains the pilot valve (40) in the third position;
- a second position in which the controller continuously maintains the pilot valve (40) in the fourth position; and
- a third position in which the controller (53) controls the position of the pilot valve (40) depending on electrical signals received from the switch means (52) and the pressure transducer (54).

15. An automatic shift according to claim 6, when appended to claim 5, and any claim depending therefrom, characterized in that the first and second limiting pressure valves (26, 27) are actuated at a pressure of approximately 3500 n/cm² and the charge pump valve (30) is actuated at a pressure of approximately 140 N/cm².
